# FASCICULE DE BREVET EUROPEEN

(11) **EP 1 143 753 B1**
(45) Date de publication et mention de la délivrance du brevet: **02.06.2004**
(21) Numéro de dépôt: 01400798.3
(22) Date de dépôt: 28.03.2001
(51) Int. Cl.: H04Q 7/32, H04M 17/00, H04Q 7/38

(54) **Selection de comptes de paiement pour des communications depuis un terminal radiotéléphonique**
Auswahl eines Zahlungskontos für Kommunikationen von einem Funkendgerät
Selection of payment accounts for communications from a radio terminal

(30) Priorité: 31.03.2000 FR 0004247
(43) Date de publication de la demande: 10.10.2001
(73) Titulaire: FRANCE TELECOM, 75015 Paris (FR)
(72) Inventeur: Leonnec, Jean-Yves, 14760 Bretteville sur Odon (FR); Burnouf, Hélène, 14280 Authie (FR); Guibert, Hervé, 14111 Louvigny (FR); Millan, Bruno, 14210 Baron sur Odon (FR); Roussel, Jean-Luc, 14310 Villy-Bocage (FR)
(74) Mandataire: Lapoux, Roland M.

(56) Documents cités:
- EP-A- 0 957 650
- WO-A-96/32700

## Description

La présente invention concerne une sélection de comptes de paiement pour des communications depuis un terminal radiotéléphonique mobile.

Actuellement, une carte d'identité d'usager SIM (Subscriber Identity Mobile) est incluse de manière amovible dans un terminal radiotéléphonique mobile. Si l'usager a souscrit un abonnement, la carte SIM est d'un premier type pour lequel toutes les communications téléphoniques sont facturées périodiquement, par exemple bimensuellement. Selon un deuxième type, la carte SIM a été prépayée sans abonnement ni facture de communications, et le coût de chaque communication téléphonique est débitée d'un compte prépayé correspondant dans un serveur de prépaiement. L'amovibilité de la carte SIM permet de prêter un terminal à un autre usager afin qu'il y introduise sa propre carte SIM.

La demande de brevet WO 9219078 du 8 Avril 1992 propose un terminal radiotéléphonique mobile équipé d'une carte SIM à laquelle sont alloués deux numéros d'identité internationale IMSI (International Mobile Subscriber Identity) correspondant à deux numéros d'annuaire respectifs MSISDN (Mobile Station ISDN Number). Selon que la carte SIM est insérée par l'une ou l'autre de ses extrémités dans le terminal, la carte SIM est identifiée par l'un ou l'autre des deux numéros IMSI, et les communications sont ainsi imputées au compte correspondant du numéro IMSI sélectionné.

Par ailleurs, la demande de brevet EP 0957650 propose de discriminer dans la même carte SIM d'un terminal radiotéléphonique deux catégories d'appel, d'une part un premier numéro d'appel entrant pour usage professionnel et un premier compte de paiement d'appel sortant facturé à l'employeur, d'autre part un deuxième numéro d'appel entrant pour usage personnel et un deuxième compte de paiement d'appel sortant facturé à l'usager. Le coût de chaque communication est aussi imputé au payeur associé à la catégorie sélectionnée.

Tous ces services selon la technique antérieure sont relatifs à une imputation du coût des communications depuis un terminal radiotéléphonique sur un compte de paiement unique d'usager mobile qui est situé dans un unique centre de facturation et qui est séparé en deux sous-comptes. En outre, l'association des deux payeurs aux numéros IMSI ou aux catégories est figée.

L'objectif de l'invention est d'imputer le paiement d'une communication depuis un terminal radiotéléphonique mobile sélectivement au compte associé à la carte d'identité SIM contenue dans le terminal et à un autre compte téléphonique prépayé ou post-payé. Cet autre compte peut être le compte de facturation associé à la ligne de réseau téléphonique commuté de l'usager possesseur de la carte SIM contenue dans le terminal, ou bien à une carte téléphonique virtuelle prépayée immatérielle ou matérielle possédée par une personne pouvant être différente du possesseur de la carte SIM.

Pour atteindre cet objectif, un procédé pour sélectionner des comptes de paiement pour des communications depuis un terminal radiotéléphonique, préalablement à tout établissement d'une communication, par une sélection entre un paiement de communication par compte associé à une carte d'identité incluse dans le terminal et un deuxième mode de paiement, est tel que caractérisé dans la revendication 1.

De cette manière, en utilisant le même terminal et la même carte SIM, les communications sont payées en relation avec deux comptes distincts, voire deux facturations distinctes, correspondant à deux personnes différentes par exemple un usager et l'employeur de celui-ci. N'importe quelle personne possédant une carte téléphonique peut utiliser le terminal pour des appels sortants notamment.

Il est rappelé qu'actuellement, pour passer un appel téléphonique depuis un terminal téléphonique quelconque au moyen d'une carte téléphonique associée à un compte de ligne téléphonique fixe, il faut appeler un serveur de carte, en composant son numéro d'appel à quatre chiffres, puis composer un numéro à neuf chiffres imprimé sur la carte et un code confidentiel à quatre chiffres, soit au total 4+4+9=17 chiffres à composer avant de composer le numéro d'appelé à au moins dix chiffres. Ces compositions sont longues et fastidieuses et sources d'erreur et constituent souvent un frein à l'utilisation de la carte.

La mémorisation du numéro de carte dès la première utilisation de la carte téléphonique par le terminal et ensuite la lecture automatique de ce numéro de carte lors de l'établissement de tout appel téléphonique ultérieur vise selon l'invention également à rendre plus aisé et rapide l'établissement d'un appel au moyen d'une carte téléphonique, en sollicitant un nombre de touches réduit.

Selon des réalisations préférées, le procédé de l'invention peut comprendre, pour la mémorisation du numéro de carte téléphonique, une saisie manuelle du numéro de carte lorsque le terminal n'est pas équipé de lecteur de carte additionnel, soit une lecture automatique du numéro de carte dans la carte téléphonique par le terminal après introduction de la carte téléphonique dans un lecteur additionnel du terminal.

L'invention offre diverses facilités à l'usager dans le terminal pour lui donner aisément et rapidement accès au service d'établissement de communications téléphoniques par carte téléphonique. Ainsi, le paiement de communication par compte associé à la carte téléphonique peut être sélectionné dès la mise en marche du terminal, ou par la suite en choisissant parmi plusieurs applications après une sélection du paiement de communication par compte associé à la carte d'identité. En outre, le numéro associé à la carte téléphonique peut être immédiatement lu dans la carte téléphonique en réponse à une mise en marche du terminal comprenant un lecteur additionnel dans lequel la carte téléphonique a déjà été introduite.

Lorsque la carte téléphonique est également associée à un code confidentiel qui doit être vérifié par le serveur correspondant avant tout appel, le procédé de l'invention comprend une saisie manuelle d'un code confidentiel de la carte téléphonique pour le mémoriser après ladite mémorisation du numéro associé à la carte téléphonique, et pour le vérifier préalablement à tout accès ultérieur à un menu d'appel pour établir une communication téléphonique dont le coût est à imputer sur le compte associé à la carte téléphonique. En dépendance du type de la carte téléphonique et de la présence ou non d'un lecteur additionnel pour le terminal, le code confidentiel peut être mémorisé dans la carte d'identité ou bien est déjà mémorisé dans la carte téléphonique, et peut être vérifié dans la carte d'identité ou bien dans la carte téléphonique sous la commande de la carte d'identité.

Selon une autre caractéristique de l'invention, le procédé comprend l'accès à un répertoire privatif associé à la carte téléphonique et contenu dans la carte d'identité seulement après mémorisation du numéro de carte téléphonique, ledit répertoire n'étant pas accessible lorsque le paiement de communication par compte associé à la carte d'identité est sélectionné. Si un code confidentiel est associé à la carte téléphonique, le répertoire privatif n'est accessible qu'après également une saisie du code confidentiel de la carte téléphonique ou une reconnaissance du code confidentiel par le terminal. Par exemple, le répertoire privatif est celui des numéros téléphoniques personnels d'un premier employé d'une entreprise qui a mis à disposition de l'employé le terminal, et le répertoire associé à la carte d'identité SIM ne contient que des numéros téléphoniques professionnels ; si le terminal est prêté à un autre employé, ce dernier ne pourra pas alors accéder au répertoire privatif puisqu'il méconnaît le numéro de carte téléphonique et/ou le code confidentiel de carte du premier employé.

L'invention concerne également une carte d'identité pour terminal radiotéléphonique contenant des moyens pour la mise en oeuvre du procédé de sélection selon l'invention.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de réseaux de télécommunication pour la mise en oeuvre d'une sélection de comptes de paiement selon l'invention ;
- la figure 2 est un exemple de diagramme de menus accessibles dans un terminal radiotéléphonique mobile lorsqu'un paiement de communication par carte téléphonique est sélectionné selon l'invention ;
- la figure 3 est un algorithme de sélection de comptes de paiement selon l'invention détaillant des étapes particulièrement pour un paiement de communication par carte téléphonique depuis un terminal radiotéléphonique mobile sans lecteur additionnel de carte téléphonique ; et
- la figure 4 est une variante d'une partie de l'algorithme de la figure 3 lorsque le terminal est équipé d'un lecteur additionnel de carte téléphonique.

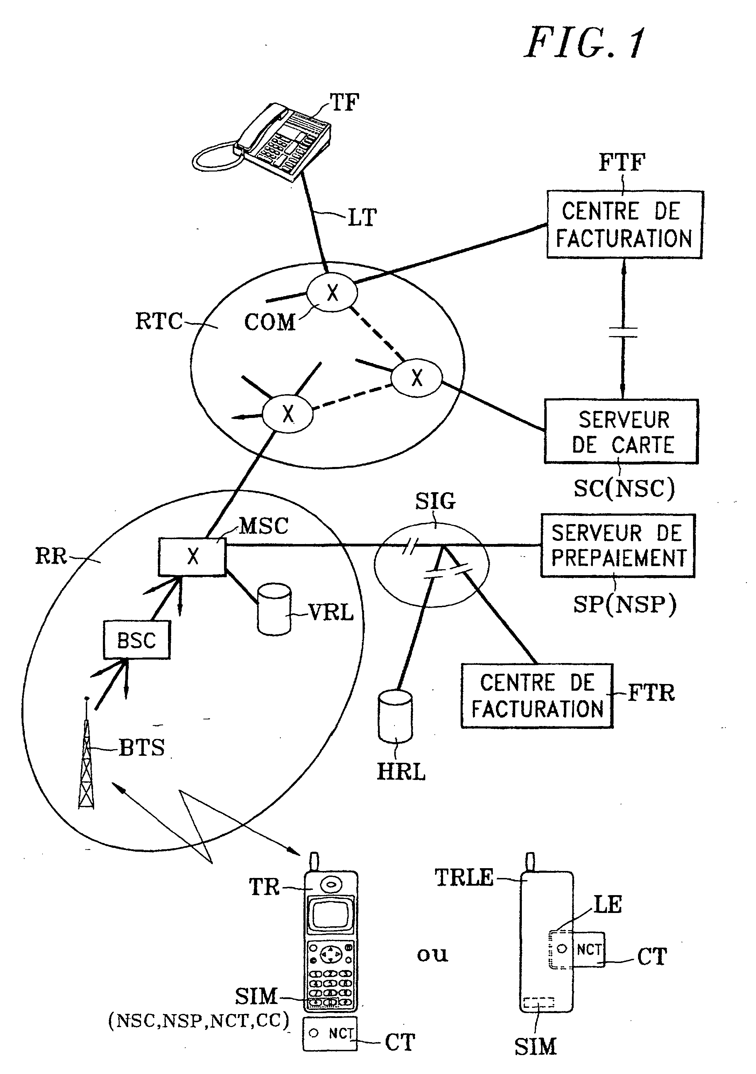

En référence à la figure 1, un système de réseaux de télécommunications pour la mise en oeuvre du procédé de sélection de comptes de paiement de communication téléphonique selon l'invention comprend un réseau de radiotéléphonie cellulaire numérique RR par exemple de type GSM 900, et un réseau téléphonique commuté RTC.

Il est supposé qu'un usager possède un terminal radiotéléphonique mobile qui peut être d'un premier type connu TR sans lecteur additionnel d'une carte téléphonique CT, ou d'un deuxième type connu TRLE avec lecteur additionnel d'une carte téléphonique CT.

La carte téléphonique CT utilisée pour la mise en oeuvre de l'invention peut être :
- une carte à puce, à contact ou sans contact, à laquelle un numéro de carte NCT et un code confidentiel CC sont attribués, et qui est associée au compte d'une ligne téléphonique fixe du réseau RTC, par exemple le compte de facturation de la ligne fixe de l'usager possesseur du terminal TR, TRLE, selon une première réalisation de l'invention ; ou
- une carte prépayée virtuelle à laquelle seulement un numéro de carte NCT est attribué et dont le crédit de consommation téléphonique correspondant initialement au prix d'achat de la carte est diminué par un serveur informatique centralisé du réseau RTC au fur et à mesure des communications téléphoniques, selon une deuxième réalisation ; une carte prépayée virtuelle peut être immatérielle, c'est-à-dire être constituée d'un numéro d'identification NCT, par exemple lisible sur la carte après grattage ; ou bien peut être matérielle, c'est-à-dire être constituée d'un dispositif physique à contact ou sans contact, par exemple comportant au moins une mémoire dans laquelle le numéro d'identification NCT a été préenregistré.

Le procédé de sélection de comptes de paiement de l'invention est d'abord décrit en référence aux figures 1 à 4 pour une carte téléphonique à puce CT, à contact ou sans contact, selon la première réalisation de l'invention. Puis les différences pour la mise en oeuvre du procédé avec une carte prépayée virtuelle seront finalement soulignées.

Le terminal TR du premier type et le terminal TRLE du deuxième type contiennent chacun une carte d'identité d'usager à circuit intégré amovible SIM (Subscriber Identity Mobile) comprenant notamment un microprocesseur, une mémoire ROM incluant un système d'exploitation de carte à circuit intégré et des programmes de communication et d'application, et une mémoire non volatile de type EEPROM. La mémoire EEPROM contient de manière connue notamment des caractéristiques relatives à l'usager, telles qu'un code secret composé par l'usager sur le clavier du terminal pour accéder aux menus offerts par le terminal, l'identité de l'usager de la carte SIM sous la forme du numéro d'identité internationale IMSI (International Mobile Subscriber Identity), le profil d'abonnement de l'usager, au moins un premier répertoire de numéros d'appelés avec leurs noms, etc... La carte SIM traite et gère les communications téléphoniques à travers le terminal TR, TRLE.

Selon le type de la carte SIM, les communications depuis le terminal sont payées périodiquement, par exemple bimensuellement si l'abonné a souscrit un abonnement téléphonique auprès de l'opérateur du réseau RR, ou bien sont prépayées sans abonnement, ni facture.

La carte SIM dans le terminal TR, TRLE est proactive afin d'initier des commandes normalisées sous la recommandation GSM 11.14 "SIM application Toolkit" ; le terminal peut ainsi recevoir des données, telles que des menus avec des sélections, depuis la carte à la suite d'une interrogation périodique du terminal.

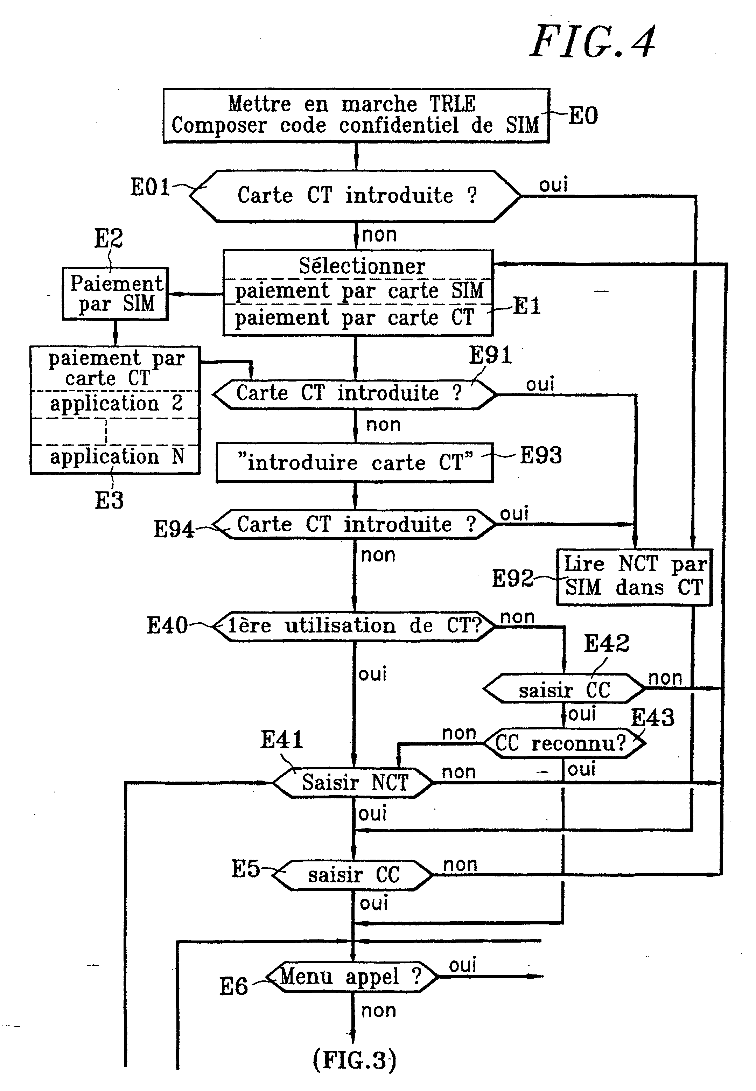

En particulier selon l'invention, la mémoire EEPROM contient une application avec des sessions pro-actives, dont l'algorithme est décrit ci-après en référence à la figure 3, pour commander la mémorisation du numéro NCT et du code confidentiel CC associés à la carte téléphonique CT selon la première réalisation et composés au clavier du terminal TE dans la mémoire EEPROM qui a pré-mémorisé le numéro d'appel NSC d'un serveur de carte téléphonique SC, et l'établissement d'une communication de départ en appelant le serveur de carte SC et en lui transmettant le numéro NCT et le code confidentiel CC.

Le terminal TRLE selon le deuxième type est similaire au terminal TR, mais possède un lecteur additionnel de carte pour recevoir la carte à puce téléphonique CT ou tout autre carte à microcircuit, telle qu'une carte de crédit bancaire, le lecteur additionnel étant adapté au type à contact ou sans contact de la carte CT. La mémoire EEPROM de la carte SIM contient également une application spécifique à l'invention afin de gérer la mémorisation du numéro NCT lu dans la carte CT introduite dans le lecteur additionnel LE du terminal TRLE, la mémorisation et la vérification du code confidentiel CC et l'établissement d'une communication de départ en appelant le serveur de carte SC. Vis-à-vis du terminal, la carte téléphonique CT est considérée comme une carte additionnelle "esclave" de la carte SIM.

Dans la figure 1 sont illustrés schématiquement les principaux moyens utiles à l'établissement et la gestion d'une communication téléphonique depuis le terminal d'usager TR, TRLE lorsqu'il est localisé dans une cellule couverte par une station de base BTS. Le réseau de radiotéléphonie RR comprend ainsi notamment un commutateur du service mobile MSC gérant principalement les communications de terminaux radiotéléphoniques qui sont dans sa zone de localisation, un contrôleur de stations de base BSC entre le commutateur MSC et la station de base BTS, un enregistreur de localisation de visiteurs VLR qui contient une base de caractéristiques relatives à la localisation et l'identité de terminaux radiotéléphoniques se trouvant dans les zones de localisation couvertes par les commutateurs MSC reliés à l'enregistreur VLR, et un enregistreur de localisation nominale HLR contenant toutes les caractéristiques de chaque usager et particulièrement les caractéristiques contenues dans la carte d'identité SIM de l'usager. La partie fixe du réseau RR comporte également un centre de facturation FTR qui contient au moins un compte de paiement à incrémenter alloué au propriétaire de la carte SIM lorsque les communications sont facturées a posteriori périodiquement par abonnement, et un serveur de prépaiement SP qui gère un compte de prépaiement à décrémenter alloué à la carte SIM lorsque les communications sont a priori déjà payées. Les unités MSC, VLR, HLR, SP et FTR sont reliées à travers un réseau de signalisation par canal sémaphore SIG dans le réseau de radiotéléphonie RR.

Par exemple en France, la carte d'identité SIM pour communication prépayée, dite également carte à puce "rechargeable", est offerte par le service "MOBICARTE" de l'opérateur FRANCE TELECOM ; le numéro d'appel NSP du serveur SP, également pré-mémorisé en mémoire EEPROM de la carte SIM, est le numéro 222 composé bien souvent automatiquement lors d'un appel depuis un terminal contenant la carte SIM.

Dans la figure 1 sont également représentés un terminal téléphonique "fixe" TF que l'usager d'une carte téléphonique CT selon la première réalisation possède normalement à son domicile et qui est relié par une ligne téléphonique d'usager LT à un autocommutateur COM du réseau RTC, un centre de facturation FTF et le serveur de carte téléphonique SC déjà cité.

Le centre de facturation FTF reçoit un message (ticket) de communication du commutateur COM auquel le terminal TF est rattaché après la fin de chaque communication de départ demandée depuis le terminal TF afin que le coût de chaque communication soit calculé en fonction du profil tarifaire de l'usager et cumulé à un premier compte de coût qui permet d'émettre périodiquement une facture de consommation téléphonique adressée à l'usager.

Le serveur SC est relié à des autocommutateurs COM du réseau téléphonique commuté RTC et autorise des communications téléphoniques qui sont établies depuis n'importe quel terminal téléphonique ou radiotéléphonique après avoir préalablement composé le numéro d'appel NSC du serveur SC et appelé celui-ci et composé et transmis le numéro NCT et le code confidentiel CC de la carte téléphonique CT selon la première réalisation. Par exemple en France, pour le réseau fixe de l'opérateur FRANCE TELECOM, le serveur SC a comme numéro d'appel NSC = 3610, et la carte téléphonique CT porte visiblement un numéro NCT à neuf chiffres et est associée à un code confidentiel CC à quatre chiffres. Après chaque communication, le serveur SC reçoit un message de communication du réseau RTC afin que le centre de facturation FTF qui gère le compte de la ligne téléphonique LT de l'usager possesseur de la carte CT calcule le coût de la communication et l'additionne à un deuxième compte de paiement spécialement affecté à la consommation téléphonique au moyen de la carte CT.

Le procédé de sélection de comptes de paiement selon l'invention décrit en détail ci-après rend possible l'imputation du coût d'une communication téléphonique de départ depuis un terminal radiotéléphonique TR ou TRLE dans deux types de compte :
1) un compte du centre de facturation FTR lorsque l'usager du terminal TR, TRLE a introduit une carte d'identité SIM associé à une facturation d'abonnement périodique, ou dans un compte du serveur de prépaiement SP lorsque l'usager du terminal TR, TRLE a introduit une carte d'identité SIM associée à un prépaiement d'un crédit de consommation téléphonique, et lorsque l'usager sélectionne un paiement par carte d'identité SIM dans le terminal ;
2) un compte du centre de facturation FTF lorsque l'usager du terminal TR, TRLE équipé d'une carte d'identité SIM quelconque a sélectionné dans le terminal un paiement par une carte téléphonique CT dont le possesseur peut être différent du possesseur de la carte SIM ou du possesseur du terminal radiotéléphonique TR, TRLE, et a utilisé les caractéristiques de la carte CT, saisies sur le clavier du terminal TR ou lues et saisies dans le terminal TRLE, pour demander l'établissement d'une communication de départ.

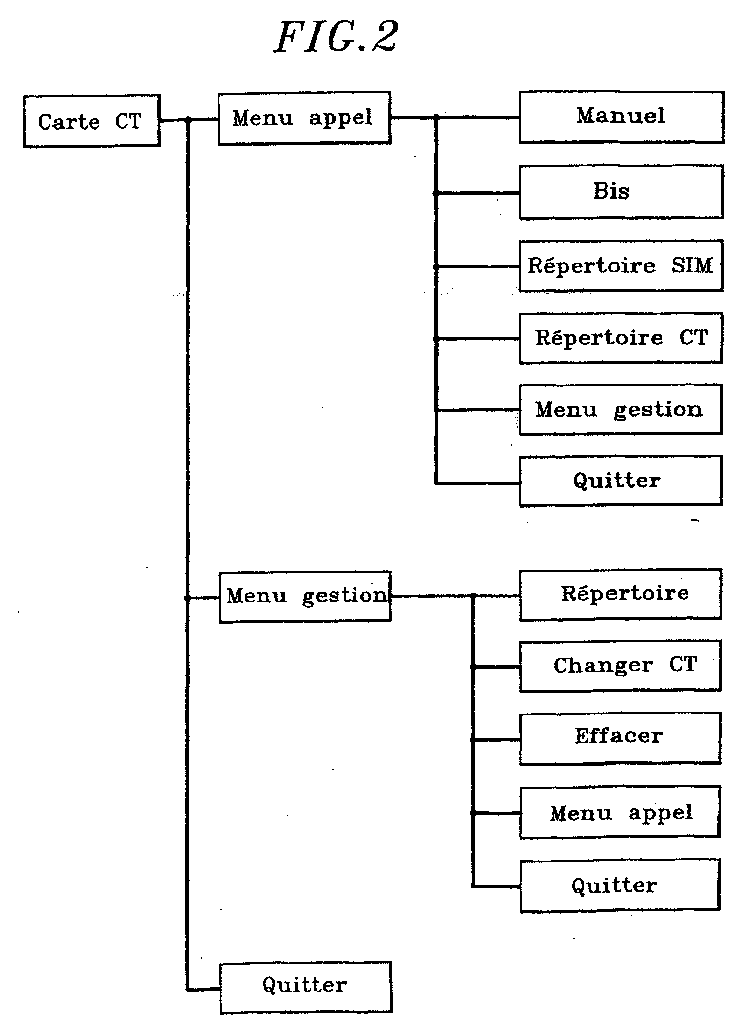

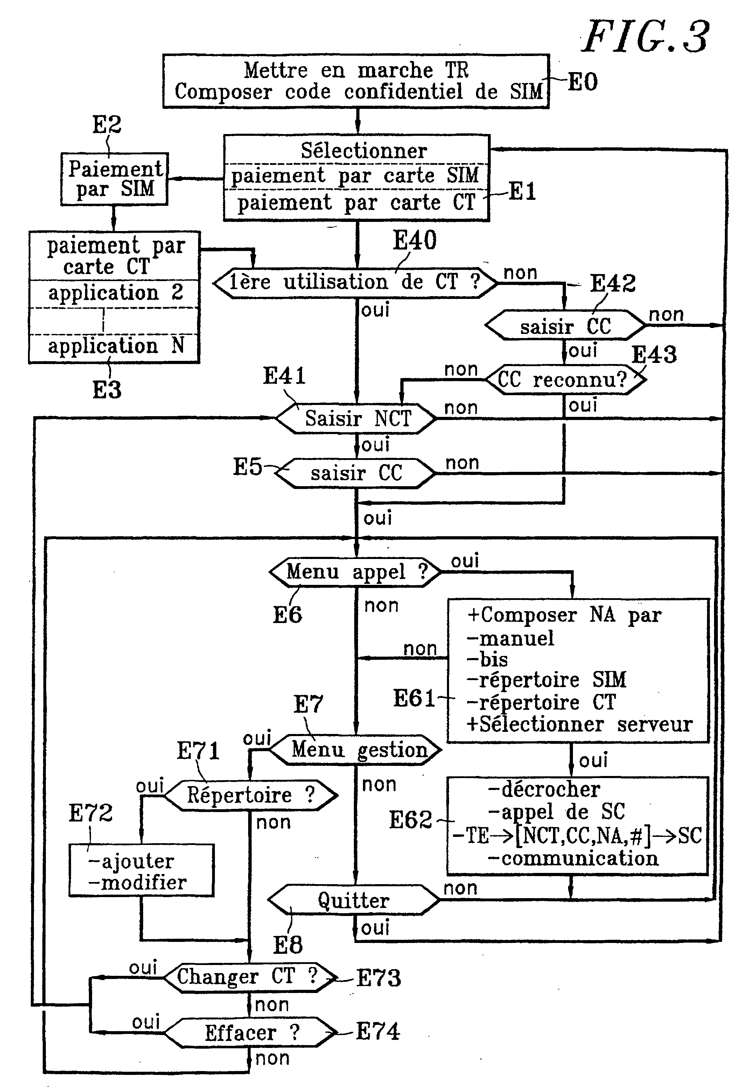

L'application de paiement d'une communication au moyen d'une carte téléphonique CT présente un arbre de menus dans le terminal radiotéléphonique TR,-TRLE montré à titre d'exemple à la figure 2. Cet arbre de menus parcouru par des sessions pro-actives est accessible par l'usager du terminal TR, TRLE lorsque celui-ci a été mis en marche, le code confidentiel associé à la carte SIM a été composé et validé, et l'item de l'application "Paiement par carte CT" a été sélectionné dans le menu principal du terminal. A défaut de sélection de l'application "Paiement par carte CT", le coût de la communication est imputée classiquement selon le type de la carte SIM contenue dans le terminal.

Les premières branches de l'arbre sont relatives à un menu "Menu appel", à un menu "Menu gestion" et à la fonction "Quitter". Une sélection dans un menu est exécutée classiquement en sollicitant une touche ascenseur ou de navigation, puis une touche de validation sur le clavier du terminal TR, TRLE.

Les menus "Menu appel" et "Menu gestion" ne peuvent être activés par la carte SIM que lorsque l'application de paiement par carte CT selon la figure 3 ou 4 a été initialisée, c'est-à-dire après saisie du numéro NCT et du code CC. Chacun des menus "Menu appel" et "Menu gestion" contient en sous-branche un retour à l'autre menu "Menu gestion" ou "Menu appel" et un retour à une page de veille du terminal par la fonction "Quitter". Toutes les fonctions liées à chaque menu sont affichables pour former une page d'écran dans le terminal et sont sélectionnables par un curseur "ascenseur".

Le menu "Menu appel" propose les fonctions suivantes participant à la génération d'un appel :
- "Manuel" pour composer un numéro d'appelé téléphonique NA au clavier du terminal ou par reconnaissance vocale si le terminal contient un dispositif de reconnaissance vocale ;
- "Bis" pour que le terminal recompose automatiquement le dernier numéro d'appelé lu dans la carte SIM ;
- "Répertoire SIM" pour rechercher un numéro d'appelé en fonction de son nom classé dans un premier répertoire, dit répertoire commun accessible en lecture à tous ; ce premier répertoire normalisé connu est accessible, modifiable et effaçable lorsque le paiement de la communication à établir doit être imputé sur le compte de la carte d'identité SIM dans le serveur SP ou dans le centre FTR, et n'est accessible qu'en lecture lorsque le paiement de la communication est à imputer sur le compte de la carte téléphonique CT dans le centre FTF ;
- "Répertoire CT" pour rechercher un numéro d'appelé en fonction de son nom classé dans un deuxième répertoire, dit répertoire privatif ; ce répertoire privatif est créé selon l'invention en mémoire EEPROM de la carte SIM par association aux paramètres NCT et CC de la carte téléphonique CT et n'est pas accessible lorsque le coût de la communication doit être imputé sur le compte de la carte d'identité SIM et est accessible, modifiable et effaçable lorsque le paiement de la communication est à imputer sur le compte de la carte téléphonique CT dans le centre de facturation FTF via le serveur de carte SC ; dans ce répertoire privatif, l'usager y inscrit par exemple les numéros des appelés personnels qui sont à appeler en dehors de ses heures de travail au moyen de la carte téléphonique personnelle CT et qui sont distincts des numéros d'appelés professionnels à appeler pendant ses heures de travail et mémorisés dans le premier répertoire, les appels avec les numéros du premier répertoire étant de préférence facturés normalement par le centre FTR à l'entreprise de l'usager, laquelle possède le terminal avec la carte SIM, ou débités dans le compte prépayé par l'entreprise dans le serveur SP.

En variante, la mémoire EEPROM de la carte SIM contient plusieurs répertoires privatifs contenus dans la carte d'identité SIM et respectivement associés à plusieurs cartes téléphoniques et accessibles respectivement par reconnaissance des couples de numéro et code confidentiel déjà mémorisés de ces cartes.

Le menu "Menu gestion" comporte les fonctions suivantes qui sont sélectionnées pour la gestion de l'application "Paiement par carte CT" :
- "Répertoire" pour ajouter ou modifier un nom d'appelé ou un numéro d'appelé dans le répertoire privatif qui est créé par association avec le couple de numéro NCT et code CC de la carte CT saisis pour la première fois ;
- "Changer CT" pour changer le numéro et/ou le code confidentiel de la carte CT mémorisée dans la mémoire EEPROM de la carte d'identité SIM en ceux associés à une autre carte téléphonique, ou bien pour effacer seulement le numéro et/ou le code confidentiel mémorisé ;
- "Effacer" pour effacer toutes les données associées à une carte téléphonique CT et mémorisées dans la mémoire EEPROM de la carte d'identité SIM, c'est-à-dire le numéro NCT, le code confidentiel CC, le répertoire privatif, et le dernier numéro d'appelé sélectionné.

En référence maintenant à la figure 3, le procédé de sélection de comptes de paiement au moyen du terminal radiotéléphonique mobile TR sans lecteur additionnel de carte téléphonique comprend essentiellement des étapes principales E0 à E8.

A l'étape initiale E0, le terminal TR est, comme il est connu, mis en marche en appuyant sur le bouton marche/arrêt de celui-ci et le code confidentiel pour la carte d'identité SIM que le terminal contient est composé sur le clavier du terminal. Après validation de ce code confidentiel dans la carte SIM, une page "Menu de paiement" selon l'invention apparaît sur l'écran du terminal TE à l'étape E1. Ce menu de paiement offre le choix entre un menu relatif à un paiement de communication par carte SIM et au paiement de communication par carte téléphonique CT.

Si le paiement par carte SIM est choisi (étape E2), la page de veille classique avec le nom de l'opérateur téléphonique dont dépend la carte SIM apparaît sur l'écran du terminal TR qui fonctionne alors comme un terminal radiotéléphonique mobile connu. Toute communication de départ est établie classiquement avec une imputation du coût de la communication dans le compte associé à la carte SIM dans le centre de facturation FTR si la carte SIM correspond à un abonnement avec facturation périodique ultérieure, ou avec décrémentation du crédit restant associé à la carte SIM dans le serveur de prépaiement SP si la carte SIM correspond au prépaiement de communications sans abonnement et facture. L'usager n'a accès qu'au répertoire commun de numéros d'appelés.

A partir de la page de veille classique, l'usager peut accéder (étape E3) à un menu présentant plusieurs (N) applications pro-actives "SIM Toolkit" parmi lesquelles l'application "paiement par carte CT" peut être sélectionnée pour établir un appel par l'intermédiaire de la carte CT.

Si le paiement par carte téléphonique CT est choisi à l'étape E1 ou E3, l'application supplémentaire propre à l'invention est activée d'abord en invitant l'usager à saisir le numéro NCT et/ou le code confidentiel CC de la carte CT au clavier du terminal TR.

Afin d'éviter de composer le long numéro de carte NCT chaque fois que la carte CT est réutilisée, notamment après chaque mise en marche du terminal, le numéro NCT est enregistré une fois pour toutes dans la carte SIM lors de la première utilisation de la carte téléphonique CT avec le terminal TR.

Dans ce cas, après l'étape E1 ou E2, l'usager soit confirme une "première utilisation de la carte téléphonique CT" par la sélection de "OUI" à une interrogation affichée sur l'écran du terminal à une étape E40, soit la carte SIM elle-même considère l'absence du numéro de carte téléphonique NCT en mémoire comme une indication de première utilisation. Après cette confirmation ou indication, le numéro de carte NCT est saisi à l'étape E41, puis le code confidentiel est saisi à l'étape E5, le procédé étant poursuivi par l'étape de "Menu Appel" E6.

Par la suite, après une nouvelle mise en marche du terminal TR, ou bien après un basculement vers l'application de paiement par carte SIM et un retour vers l'application de paiement par carte CT, l'étape E1 ou E2 se poursuit par une étape E40 au cours de laquelle l'usager signale par "NON" que la carte a déjà été utilisée par le terminal TR et donc que le numéro NCT devrait être déjà mémorisé dans la carte SIM, ou bien au cours de laquelle la carte SIM elle-même considère la mémorisation initiale du numéro de carte téléphonique NCT comme une utilisation actuelle de la carte téléphonique CT. L'usager saisit ensuite le code confidentiel CC à une étape E42, et le procédé continue vers l'étape E6 via une étape E43 si le code CC est reconnu par la carte SIM. Dans le cas contraire à l'étape E43, le numéro NCT est saisi à l'étape E41 pour l'associer au code CC saisi à l'étape suivante E5, la carte CT étant considérée comme nouvelle pour le terminal TR.

Si aucune saisie de numéro NCT ou de code CC n'est effectuée à l'étape E41 ou à l'étape E5, E42 après l'expiration d'une temporisation prédéterminée ou après l'appui sur une touche prédéterminée, le procédé revient à la page de menu de paiement affichée à l'étape E1.

Après saisie du numéro NCT et du code CC, l'usager aborde l'arbre de menus de la figure 2 pour le paiement par la carte téléphonique CT.

Si le menu "Menu appel" est sélectionné à l'étape suivante E6, l'usager souhaitant composer un numéro d'appelé NA à l'étape E61 en vue d'établir une communication téléphonique avec l'appelé désigné par ce numéro à l'étape E62 a le choix de composer le numéro manuellement, ou par répétition automatique (bis) du dernier numéro composé, et par sélection et composition automatique du numéro dans le répertoire commun ou dans le répertoire privatif dans la mesure où il a été créé et contient déjà des données. A l'étape E62, la communication est établie après avoir appuyé sur la touche de décrochage du clavier du terminal, ou avoir sélectionné le bouton de décrochage sur l'écran du terminal, et après que la carte SIM ait déclenché dans le terminal un appel avec le numéro NSC du serveur de carte SC, puis ait transmis un message comprenant le numéro NCT et le code confidentiel CC de carte téléphonique CT et le numéro d'appelé composé NA et terminé par le signe # de la touche dièse vers le serveur de carte téléphonique SC. La communication est facturée sur le compte de la carte CT désigné par le serveur de carte SC dans le centre de facturation FTF gérant la consommation téléphonique "fixe" du possesseur de la carte CT.

A la fin de la communication après raccrochage, le menu "Menu appel" est à nouveau affiché sur l'écran du terminal TR afin que l'usager procède par exemple à un autre appel par les étapes E6, E61 et E62, ou à la sélection du menu "Menu gestion" par l'étape E7.

Si dans le menu "Menu appel" après validation du numéro NCT et du code confidentiel CC, le menu "Menu gestion" est sélectionné par l'usager à l'étape E7, l'une des fonctions "Répertoire", "Changer CT" et "Effacer" peut être choisie pour compléter, ou modifier ou effacer tout ou partie des données du répertoire privatif relatif à la carte CT. Lorsque la fonction "Répertoire" est sélectionnée (étape E71), le répertoire privatif est accessible pour ajouter ou modifier des données tels qu'un numéro d'appelé et/ou un nom d'appelé (étape E72) de la carte SIM par écriture en mémoire EEPROM. Lorsque la fonction "Changer CT" ou "Effacer" est sélectionnée à l'étape E73 ou E74, le procédé revient à l'étape E41 pour saisir les numéro et code NCT et CC de la carte CT, ou bien ceux d'une autre carte téléphonique si la fonction "Changer CT" à l'étape E73 est sélectionnée, ou bien ceux d'une autre carte et des données de répertoire privatif si la fonction "Effacer" à l'étape E74 est sélectionnée.

Si aucune des étapes E71, E73 et E74 du menu "Menu gestion" n'a été sélectionnée ou si seulement des éléments du répertoire privatif ont été changés ou modifiés à l'étape E72, le procédé retourne au menu "Menu appel" à l'étape E6.

Si aucune fonction n'est sélectionnée dans le menu "Menu appel" ou "Menu gestion", l'usager peut retourner à l'étape E1 d'affichage de la page de menu de paiement par la fonction "Quitter" à l'étape E8, par exemple pour établir une communication par paiement par carte SIM selon l'étape E2.

La figure 4 montre un algorithme du procédé de sélection de comptes de paiement au moyen du deuxième terminal radiotéléphonique mobile TRLE doté d'un lecteur additionnel LE pour carte téléphonique CT.

Comparativement à la figure 3, le procédé selon la figure 4 n'en diffère essentiellement que par l'adjonction d'une étape E01 entre les étapes E0 et E1 et l'adjonction d'étapes E91 à E94 après la sélection du paiement par carte téléphonique dans le menu de paiement à l'étape E1 et avant l'étape de première utilisation de carte E40 et l'étape de "Menu Appel" E6.

Immédiatement après l'étape E0 de la mise en marche (mise sous tension) du terminal TRLE et de la validation du code confidentiel attaché à la carte SIM, le procédé passe à l'étape E1 comme dans la figure 3 si aucune carte téléphonique CT n'est contenue dans le terminal. Par contre, si à l'étape E01 le terminal constate qu'une carte CT a déjà été introduite dans le lecteur additionnel LE, le procédé passe immédiatement de l'étape initiale E0 aux étapes E92 et E5 afin que la carte SIM lise automatiquement le numéro NCT dans la carte téléphonique CT pour l'enregistrer en mémoire EEPROM, et l'usager compose le code confidentiel CC associé à la carte CT.

Après sélection de l'application "paiement par carte CT" à l'étape E1 ou à l'étape E3, l'étape E91 vérifie que la carte CT est introduite dans le lecteur additionnel LE. Si la carte CT est déjà introduite, les étapes E92 et E5 sont effectuées.

Si à l'étape E91, le terminal TRLE constate qu'aucune carte téléphonique n'est présente dans le lecteur additionnel LE, un message "Introduire carte téléphonique" est affiché ou diffusé à l'étape E93. Le terminal TRLE vérifie de nouveau si une carte téléphonique est introduite à l'étape E94 pendant une durée prédéterminée de quelques secondes. Lorsqu'une carte CT a été introduite dans le lecteur additionnel LE pendant cette durée, le procédé passe de l'étape E94 à l'étape de lecture automatique E92 du numéro de carte NCT. Sinon à l'expiration de ladite durée prédéterminée ou après l'appui sur une touche prédéterminée, le procédé passe de l'étape E94 à l'étape E40 pour demander à l'usager de composer manuellement le numéro NCT et/ou le code CC au clavier du terminal, aux étapes E41 et E5, ou à l'étape E42.

Lorsque la carte téléphonique CT utilisée est une carte téléphonique prépayée virtuelle selon la deuxième réalisation de l'invention, les procédés selon les figures 3 et 4 sont essentiellement modifiés à cause de l'absence du code confidentiel CC qui entraîne la suppression des étapes E42, E43 et E5 pour la saisie de code, ainsi que la transmission d'un message sans code confidentiel CC par la carte SIM à l'étape E62. Le serveur SC est dans cette deuxième réalisation remplacé par un serveur pour carte téléphonique prépayée virtuelle.

Les terminaux TR et TRLE peuvent être utilisés avec les deux types immatériel et matériel de carte virtuelle. Une carte virtuelle prépayée matérielle est utilisée selon le procédé de la figure 4, en lisant son numéro NCT, typiquement à treize chiffres, dans sa mémoire à l'étape E92 si la carte a été introduite dans le lecteur additionnel avant l'étape E01 ou E91 ou à l'étape E94.

En variante, les étapes de saisie E41 et E92 concernent également un nom ou un numéro abrégé identifiant la carte qui est saisi une première fois au cours de l'étape E41, notamment pour une carte immatérielle, puis saisie au cours d'étapes ultérieures E42, l'étape E43 recherchant le nom ou numéro abrégé de carte, comme pour le code confidentiel CC.

Cette dernière variante évite de saisir plusieurs fois le long numéro NCT de la carte et permet de différencier différentes cartes CT utilisées fréquemment avec le terminal et ainsi différents répertoires privatifs associés à ces cartes.

Par ailleurs, lorsque le terminal est destiné à demander des appels téléphoniques pour tous les types de carte téléphonique décrites ci-dessus, l'usager sélectionne le type de la carte dans une table de types de carte affichée à l'écran du terminal, préalablement à l'appel, par exemple à l'étape E3 ou à l'étape E61. Le numéro d'appel du serveur de carte, tel que le serveur SC, correspondant au type sélectionné de la carte téléphonique est ensuite lu dans une table de numéros de serveur de carte contenue en mémoire EEPROM dans la carte SIM afin que le terminal TR, TRLE appelle automatiquement le serveur correspondant avant de lui transmettre le message avec au moins le numéro de carte NCT à l'étape E62.

## Revendications

1. Procédé pour sélectionner des comptes de paiement pour des communications depuis un terminal radiotéléphonique (TR, TRLE), préalablement à tout établissement d'une communication, par une sélection (E1) entre un paiement de communication (E2) par compte (FTR ; SP) associé à une carte d'identité (SIM) incluse dans le terminal et un deuxième mode de paiement, **caractérisé en ce que** le deuxième mode de paiement est un paiement de communication (E40-E8) par compte (SC, FTF) associé à une carte téléphonique (CT), et **en ce que** le procédé comprend une mémorisation (E41) d'un numéro (NCT) associé à la carte téléphonique (CT) dans la carte d'identité (SIM) lorsque le paiement par compte associé à la carte téléphonique est une première fois sélectionné dans le terminal, et une lecture automatique (E62) du numéro de carte mémorisé (NCT) pour l'introduire dans un message à transmettre depuis le terminal (TR, TRLE) lors de l'établissement de toute communication téléphonique après sélection du paiement par compte associé à la carte téléphonique.

2. Procédé conforme à la revendication 1, comprenant pour la mémorisation (E41) du numéro (NCT) de la carte téléphonique (CT), une saisie manuelle (E41) du numéro de carte, ou bien une lecture automatique (E92) du numéro de carte (NCT) dans la carte téléphonique (CT) par le terminal après introduction (E91, E94, E01) de la carte téléphonique (CT) dans un lecteur additionnel (LE) du terminal.

3. Procédé conforme à la revendication 1 ou 2, selon lequel le paiement de communication par compte associé à la carte téléphonique est sélectionné (E1) dès la mise en marche (E0) du terminal (TR, TRLE), ou par la suite en choisissant parmi plusieurs applications (E3) après une sélection (E2) du paiement de communication par compte associé à la carte d'identité (SIM).

4. Procédé conforme à l'une quelconque des revendications 1 à 3, selon lequel le numéro (NCT) associé à la carte téléphonique (CT) est immédiatement lu dans la carte téléphonique en réponse à une mise en marche (E0) du terminal comprenant un lecteur additionnel (LE) dans lequel la carte téléphonique (CT) a déjà été introduite (E01).

5. Procédé conforme à l'une quelconque des revendications 1 à 4, comprenant une saisie manuelle (E5, E42) d'un code confidentiel (CC) de la carte téléphonique pour le mémoriser après ladite mémorisation (E41) du numéro (NCT) associé à la carte téléphonique, et pour le vérifier préalablement à tout accès ultérieur à un menu d'appel (E6) pour établir une communication téléphonique dont le coût est à imputer sur le compte associé à la carte téléphonique.

6. Procédé conforme à l'une quelconque des revendications 1 à 5, comprenant l'accès (E71) à un répertoire privatif associé à la carte téléphonique (CT) et contenu dans la carte d'identité (SIM) seulement après mémorisation (E41) au moins du numéro de carte téléphonique (NCT), ledit répertoire privatif n'étant pas accessible lorsque le paiement de communication (E2) par compte associé à la carte d'identité (SIM) est sélectionné.

7. Procédé conforme à la revendication 6, selon lequel le répertoire privatif n'est accessible (E71) qu'après également une saisie (E5) d'un code confidentiel (CC) de la carte téléphonique (CT) ou une reconnaissance (E43) du code confidentiel par le terminal.

8. Procédé conforme à la revendication 6 ou 7, selon lequel plusieurs répertoires privatifs sont contenus dans la carte d'identité (SIM) et respectivement associés à plusieurs cartes téléphoniques (CT).

9. Procédé conforme à l'une quelconque des revendications 1 à 8, selon lequel le type de la carte téléphonique (CT) est sélectionné dans une table de types de carte afin que le terminal (TR, TRLE) appelle (E62) automatiquement un serveur correspondant au type de carte sélectionné avant de lui transmettre ledit message avec le numéro de carte (NCT).

## Patentansprüche

1. Verfahren zum Auswählen von Zahlungsberechnungen für Kommunikationen von einem Mobilfunk-Endgerät (TR, TRLE) vor jeder Herstellung einer Kommunikation durch eine Auswahl (E1) zwischen einer Kommunikationszahlung (E2) pro Berechnung (FTR ; SP) verbunden mit einer im Endgerät enthaltenen Identitätskarte (SIM) und einer zweiten Zahlungsart, **dadurch gekennzeichnet, daß** die zweite Zahlungsart eine Kommunikationszahlung (E40-E8) pro Berechnung (SC, FTF) in Verbindung mit einer Telefonkarte (CT) ist und daß das Verfahren eine Speicherung (E41) einer mit der Telefonkarte (CT) verbundenen Nummer (NCT) in der Identitätskarte (SIM) umfaßt, wenn die mit der Telefonkarte verbundene Zahlung pro Berechnung ein erstes Mal im Endgerät ausgewählt wird, und ein automatisches Lesen (E62) der gespeicherten Kartennummer (NCT) zum Einführen derselben in eine vom Endgerät (TR, TRLE) zu übertragende Nachricht bei der Herstellung der gesamten Telefonkommunikation nach Auswahl der mit der Telefonkarte verbundenen Zahlung pro Berechnung.

2. Verfahren nach Anspruch 1, mit einer Handerfassung (E41) der Kartennummer oder auch einem automatischen Lesen (E92) der Kartennummer (NCT) in der Telefonkarte (CT) durch das Endgerät nach Einführung (E91, E94, E01) der Telefonkarte (CT) in einen zusätzlichen Leser (LE) des Endgeräts zur Speicherung (E41) der Nummer (NCT) der Telefonkarte (CT).

3. Verfahren nach Anspruch 1 oder 2, wonach die mit der Telefonkarte verbundene Kommunkationszahlung pro Berechnung bei Inbetriebsetzung (E0) des Endgeräts (TR, TRLE) oder in Folge einer Wahl unter mehreren Anwendungen (E3) nach einer Auswahl (E2) der Kommunikationszahlung pro Berechnung in Verbindung mit der Identitätskarte (SIM) ausgewählt (E1) wird.

4. Verfahren nach einem beliebigen der Ansprüche 1 bis 3, wonach die mit der Telefonkarte (CT) verbundene Nummer (NCT) sofort in der Telefonkarte als Reaktion auf eine Inbetriebnahme (E0) des Endgeräts mit einem zusätzlichen Leser (LE), in den die Telefonkarte (CT) schon eingeführt worden ist (E01), gelesen wird.

5. Verfahren nach einem beliebigen der Ansprüche 1 bis 4 mit einer Handerfassung (E5, E42) eines vertraulichen Codes (CC) der Telefonkarte zum Speichern desselben nach der Speicherung (E41) der mit der Telefonkarte verbundenen Nummer (NCT), und zum vorhergehenden Überprüfen derselben für jeden späteren Zugriff auf ein Rufmenü (E6) zum Herstellen einer Telefonkommunikation, deren Kosten mit der mit der Telefonkarte verbundenen Berechnung zu verrechnen ist.

6. Verfahren nach einem beliebigen der Ansprüche 1 bis 5, mit dem Zugriff (E71) auf ein mit der Telefonkarte (CT) verbundenes und in der Identitätskarte (SIM) enthaltenes Privatverzeichnis nur nach Speicherung (E41) von mindestens der Nummer der Telefonkarte (NCT), wobei das Privatverzeichnis nicht zugänglich ist, wenn die mit der Identitätskarte (SIM) verbundene Kommunikationszahlung (E2) pro Berechnung ausgewählt wird.

7. Verfahren nach Anspruch 6, wonach das Privatverzeichnis auch nur nach einer Erfassung (E5) eines vertraulichen Codes (CC) der Telefonkarte (CT) oder einer Erkennung (E43) des vertraulichen Codes durch das Endgerät zugänglich ist (E71).

8. Verfahren nach Anspruch 6 oder 7, wonach mehrere Privatverzeichnisse in der Identitätskarte (SIM) enthalten sind und jeweils mit mehreren Telefonkarten (CT) verbunden sind.

9. Verfahren nach einem beliebigen der Ansprüche 1 bis 8, wonach die Art der Telefonkarte (CT) in einer Tabelle von Kartenarten ausgewählt wird, damit das Endgerät (TR, TRLE) automatisch einen Bediener entsprechend der ausgewählten Kartenart ruft (E62), bevor es ihm die Nachricht mit der Kartennummer (NCT) überträgt.

## Claims

1. Process for selecting payment accounts for calls from a radiotelephone terminal (TR, TRLE), prior to making any call, by choosing (E1) between a call payment (E2) by account (FTR; SP) associated with an identity card (SIM) included in the terminal and a second method of payment, **characterised in that** the second method of payment is a call payment (E40-E8) by account (SC, FTF) associated with a telephone card (CT), and **in that** the process comprises storing (E41) a number (NCT) associated with the telephone card (CT) in the identity card (SIM) when the payment by account associated with the telephone card is first selected in the terminal, and automatic reading (E62) of the memorised card number (NCT), in order to introduce it into a message to be transmitted from the terminal (TR, TRLE) when any telephone call is made after selection of the payment by account associated with the telephone card.

2. Process according to claim 1, comprising, for storing (E41) the number (NCT) of the telephone card (CT), manual inputting (E41) of the card number, or automatic reading (E92) of the card number (NCT) in the telephone card (CT) by the terminal after the insertion (E91, E94, E01) of the telephone card (CT) in an additional reader (LE) of the terminal.

3. Process according to claim 1 or 2, wherein the call payment by account associated with the telephone card is selected (E1) as soon as the terminal (TR, TRLE) is actuated (E0), or thereafter by choosing from a number of applications (E3) after selecting (E2) the call payment by account associated with the identity card (SIM).

4. Process according to any one of claims 1 to 3, wherein the number (NCT) associated with the telephone card (CT) is immediately read in the telephone card in response to actuation (E0) of the terminal comprising an additional reader (LE) into which the telephone card (CT) has already been inserted (E01).

5. Process according to any one of claims 1 to 4, comprising manually inputting (E5, E42) a confidential code (CC) for the telephone card for storing it after the storing (E41) of the number (NCT) associated with the telephone card, and for checking it prior to any subsequent access to a call menu (E6) for making a telephone call the cost of which is to be charged to the account associated with the telephone card.

6. Process according to any one of claims 1 to 5, comprising accessing (E71) a private address book associated with the telephone card (CT) and contained in the identity card (SIM) only after storing (E41) at least the telephone card number (NCT), wherein said private address book can only be accessed when the call payment (E2) by account associated with the identity card (SIM) is selected.

7. Process according to claim 6, wherein the private address book can only be accessed (E71) after also inputting (E5) a confidential code (CC) of the telephone card (CT) or recognition (E43) of the confidential code by the terminal.

8. Process according to claim 6 or 7, wherein a number of private address books are contained in the identity card (SIM) and associated, respectively, with a number of telephone cards (CT).

9. Process according to any one of claims 1 to 8, wherein the type of telephone card (CT) is selected from a table of types of card so that the terminal (TR, TRLE) automatically calls (E62) a server corresponding to the type of card selected before sending it said message with the card number (NCT).
